**Europäisches Patentamt**

**European Patent Office**

**Office européen des brevets**

(19)

(11) Veröffentlichungsnummer : **0 032 406**
**B1**

(12)

# EUROPÄISCHE PATENTSCHRIFT

(45) Veröffentlichungstag der Patentschrift :
04.07.84

(51) Int. Cl.³ : **A 47 J 27/09**

(21) Anmeldenummer : **81100308.6**

(22) Anmeldetag : **16.01.81**

(54) **Dampfdruckkochtopf.**

(30) Priorität : **22.01.80 DE 3002204**

(43) Veröffentlichungstag der Anmeldung :
**22.07.81 Patentblatt 81/29**

(45) Bekanntmachung des Hinweises auf die Patenterteilung : **04.07.84 Patentblatt 84/27**

(84) Benannte Vertragsstaaten :
**AT BE CH DE FR GB IT LI LU NL SE**

(56) Entgegenhaltungen :
CH-A- 267 665
DE-A- 2 230 704
DE-A- 2 352 389
DE-A- 2 510 808
DE-U- 7 824 088
US-A- 2 635 630

(73) Patentinhaber : **WÜRTTEMBERGISCHE METALLWA-**
**RENFABRIK AG.**
**Postfach 76**
**D-7340 Geislingen/Steige (DE)**

(72) Erfinder : **Bauer, Ewald**
**Franzosenweg 10**
**D-7340 Geislingen/Steige-Weiler (DE)**

(74) Vertreter : **Patentanwälte Dipl.-Ing. A. Grünecker,**
**Dr.-Ing. H. Kinkeldey, Dr.-Ing. W. Stockmair,**
**Dr. rer. nat. K. Schumann, Dipl.-Ing. P.H. Jakob, Dr.**
**rer. nat. G. Bezold Maximilianstrasse 58**
**D-8000 München 22 (DE)**

**Beschreibung**

Die Erfindung betrifft einen Dampfdruckkochtopf nach dem Oberbegriff des Anspruches 1.

Es hat sich gezeigt, daß die für das Kochen mit Dampfdruck notwendigen Sicherheits- und Überwachungseinrichtungen am Kochtopf bzw. dessen Deckel unerläßlichen Einrichtungen vielen Hausfrauen Schwierigkeiten beim Reinigen der Kochgeschirre bereiten. Frei vom Dampf durchströmte Ventile bzw. Druckanzeiger sammeln in ihren Hohlräumen Ablagerungen von Fett und Speiseresten, welche die Funktion beeinträchtigen können. Ablagerungen können sich auch zwischen fest angeschraubten Aufnahmekörpern für Sicherheitseinrichtungen, gegebenenfalls aus einem Griff bestehend, und den Deckel bzw. Topf bilden. Dazu sind Ablagerungen nur zu entfernen, wenn der Aufnahmekörper bzw. der Griff entfernt wird. Eine gründliche Reinigung des Kochgeschirres erfordert somit das Abnehmen des Aufnahmekörpers vor und das Wiederzusammensetzen nach dem Reinigen. Bei federbelasteten Sicherheits- bzw. Überwachungsorganen sind die Einzelteile so zusammengesetzt und mittels der direkt oder indirekt an der Befestigungseinrichtung abgestützten Feder gehalten, daß die Einrichtung in Einzelteile zerfällt, wenn die Befestigungseinrichtung gelöst wird. Der Aufwand bei der Demontage und die Befürchtung, die Einzelteile nicht wieder richtig zusammensetzen zu können, führt dazu, daß eine Reinigung selten oder nie vorgenommen wird.

Bei einem dem Oberbegriff entsprechenden Dampfdruckkochtopf (DE-A-23 52 389) sind in einem die Deckelfläche teilweise übergreifenden, an diesem befestigten Stielgriff ein Sicherheitsventil mit einer Einstellmöglichkeit für den Ansprechdruck, eine Druckanzeige und eine Verriegelungseinrichtung gegen Öffnen unter Druck untergebracht. Der Griff wird am Deckel mittels einer Ringmutter gehaltert, die am Deckelinneren auf ein am Gehäuse des Druckanzeigers angebrachtes Außengewinde aufschraubbar ist. Über diese Ringmutter ist das Fußteil einer elastischen Gummikappe gespannt, die damit den Druckanzeiger gegen das Topfinnere abdichtet. Das Überdruckventil besteht aus einer Deckelöffnung, auf der sich ein am einen Ende einer langen, gekröpften Torsionsfeder angeordneter Ventilkegel abstützt. Das andere Ende der Torsionsfeder ist im Stielgriff gelagert und mittels eines dort angeordneten Schwenksegments vorspannbar. Das Schwenksegment wird seinerseits durch einen Schieber bewegt, der eine aus einer Deckelöffnung nach oben herausragende Nase zum Betätigen aufweist. Die Ausnehmung im Deckelgriff ist nach innen durch eine Gleitplatte für den Schieber abgedeckt. Das Überdruckventil mit der Deckelöffnung, dem Ventilkegel und dem dieses tragenden Ende der Torsionsfeder bewegen sich in einem nach außen offenen Hohlraum des den Deckel übergreifenden Griffendes. Dieser Hohlraum wird zum Inneren des Griffes hin durch ein Füllstück begrenzt, welches einen einen Abschnitt der Torsionsfeder drehbar lagernden Kanal aufweist. Wegen des für das Drehen notwendigen Spiels zwischen dem Kanal und der Torsionsfeder bietet das Füllstück somit keine vollständige Dichtung nach außen. Es können damit nicht nur ein Teil des bei ansprechendem Ventil austretenden Dampfes aus dem Topfinneren sowie mitgerissene Speiseteile in diesen Kanal gelangen, sondern bei jeder Reinigung des Deckels auch Reinigungsflüssigkeit in das Griffinnere und an die dort untergebrachten Bewegungselemente gelangen. Den so einmal feucht gewordenen Innenraum wieder auszutrocknen, erfordert nicht nur das Abnehmen des Griffes vom Deckel, sondern auch eine weitgehende Demontage. Um den Griff vom Deckel abzunehmen, auch zur Reinigung der Anlageflächen und des Bereiches um das Überdruckventil, muß die Ringmutter zusammen mit der an ihr angebrachten Gummihaube entfernt werden. Damit fallen aber auch die Einzelteile des Überdruckventiles auseinander. Für die Gummihaube stellt das Lösen der Ringmutter eine beträchtliche Beanspruchung dar, die ihre Haltbarkeit und ihren dichten Sitz belastet.

Für gewichtsbelastete Sicherheitsorgane u. Überdruckventile, stellt sich das Problem des Lösens nicht in der Art wie bei federbelasteten Sicherheits- oder Überwachungsorgane : sie sind nich fest mit dem Deckel verbunden, sondern nur aufgesteckt und gegen ein unbeabsichtigtes Abfallen gesichert, jedoch ohne Lösen von Befestigungseinrichtungen abzuheben. Ein derartiges gewichtsbelastetes Sicherheitsventil stellt der Sockel eines aus der schweizer Patentschrift 267 665 bekannten Druckanzeigers im Zusammenwirken mit einem auf den Deckel angeordneten Stutzen dar. Der Stutzen enthält eine Bohrung, deren Deckelende einen Ventilsitz bildet. Der Sockel umgreift nach dem Aufsetzen den Stutzen mit Spiel und ist mittels eines Sprengringes dagegen gesichert, beim Hantieren mit dem Deckel von diesem abzufallen. In aufgesteckter Stellung sitzt ein mit dem Sockel fest verbundener Einsatz auf dem oberen Bohrungsende auf. Der Einsatz weist eine Bohrung auf, deren Durchmesser kleiner als der des Stutzens ist. Beide Bohrungen fluchten in der Aufsetzstellung miteinander, so daß vom Topfinneren ein Kanal zu dem über dem Sockel angeordneten Druckanzeiger führt. Diese bekannten Sicherheits- und Überwachungseinrichtungen fallen nicht unter den Gattungsbegriff der Anmeldung, da sie nicht durch eine lösbare Befestigungseinrichtung mit dem Deckel verbindbar sind. Die Einrichtung ist hier nur als Beispiel für die Anordnung gewichtsbelasteter Sicherheitseinrichtungen im Gegensatz zu federbelasteten aufgeführt.

Aufgabe der vorliegenden Erfindung ist es, einen Dampfdruckkochtopf gemäß dem Oberbegriff des Anspruches 1 zu schaffen, wobei die Sicherheits- und Überwachungseinrichtungen gegen Verschmutzungen abgedichtet sind und dies auch bleiben, wenn ihr Aufnahmekörper durch Lösen der Befestigungseinrichtung vom Deckel abgenommen wird.

Die Aufgabe wird durch die Merkmale gemäß den kennzeichnenden Teile des Anspruches 1 gelöst.

Die Sicherheits- und Überwachungseinrichtungen sind damit gegen Verschmutzung geschützt, und zwar sowohl bei am Deckel anmontierten als auch zur Reinigung der Anlageflächen abgenommenem Aufnahmekörper. Ein Zerlegen ihrer jeweiligen Bestandteile ist weder notwendig noch möglich. Die Funktion wird also weder durch Verschmutzung noch durch eine möglicherweise fehlerhafte Montage nach einem Reinigungsvorgang gefährdet. Eine gelegentliche Reinigung der Anlageflächen des Aufnahmekörpers am Deckel kann auf einfache Weise durch das Lösen und Wiederanbringen des gesonderten Befestigungselementes erfolgen, so daß die Hausfrau keinen technischen Schwierigkeiten gegenübersteht.

In einfacher Weise kann zum Abdichten der Sicherungs- und Überwachungseinrichtungen jeweils eine Membran vorgesehen sein. Die Membranen gewähren eine sichere Abdichtung gegen das Topfinnere bei gleichzeitiger Druckübertragung. Da sie zu Reinigungszwecken, auch beim Abnehmen des Aufnahmekörpers, nicht entfernt werden müssen, können sie mit geeigneten Bauteilen der jeweiligen Einrichtung fest verbunden und damit sicher gehaltert werden. Außerdem entfallen alle besonderen Beanspruchungen.

Eine bevorzugte Ausführungsform eines erfindungsgemäßen Dampfdruckkochtopfes ist gekennzeichnet durch ein Sicherheitsventil mit einer Membran, die fest mit dem Aufnahmekörper verbunden und mittels eines im abgedichteten Hohlraum beweglich und durch eine Feder belastet angeordneten Ventilstößels gegen einen Ventilsitz drückbar ist. Die Membran dichtet bei diesem Sicherheitsventil den Ventilstößel und Feder enthaltenden Hohlraum bei jeder Ventilstellung ab. Spricht das Ventil bei Überdruck im Topf an, so streicht der austretende Dampf nur an der Membran entlang. Beim Reinigen des Deckels kann keine Reinigungsflüssigkeit in das Innere des Hohlraumes gelangen. Das gleiche gilt, wenn der Aufnahmekörper vom Deckel abgenommen ist.

In einfacher Weise kann die Membran fest mit einer fest im Gehäuse angebrachten, den Hohlraum bildenden Hülse verbunden sein. Sie ist damit bei der Herstellung einfach montierbar und gegen Entfernen beim Gebrauch des Topfes geschützt gehaltert.

Bei einer anderen Ausführungsform ist die Membran fest auf der dem Topfinneren abgewandten Seite eines Ventilkegels angeordnet, wodurch sich die gleichen Vorteile bei der Montage und dem Gebrauch ergeben. Zusätzlich ist die Membran durch den Ventilkegel weitgehend gegen den beim Ansprechen des Ventils ausströmenden heißen Dampf abgedeckt.

Ein erfindungsgemäßer Dampfdruckkochtopf ist weiter gekennzeichnet durch einen Druckanzeiger mit einem an der Deckelaußenseite angeordneten, durch eine Membran abgedichteten Hohlraum im Aufnahmekörper, wobei die Membran mit dem Topfinneren durch eine Deckelöffnung in Verbindung steht, an der sie unter dem Druck eines im Hohlraum federbelastet angeordneten Anzeigestiftes anliegt, auf den sie den Druck im Topfinneren überträgt. Auch bei dem eingangs gewürdigten bekannten Dampfdruckkochtopf wird der Druck im Kochtopf auf den Stößel eines Druckanzeigers über eine Gummikappe übertragen. Die Kappe hängt dabei jedoch frei in das Innere des Kochtopfes und ist sowohl beim Kochvorgang als auch beim Reinigen des geöffneten Deckels erheblichen Beanspruchungen ausgesetzt. Bei der erfindungsgemäßen Ausbildung des Druckanzeigers liegt die Membran weitgehend geschützt im Aufnahmekörper. Bei abgenommenem. Deckel und dessen Reinigung verschließt sie die den Druck übertragende Deckelöffnung unter dem Druck der den Anzeigestift belastenden Feder. Sollte beim Druckaufbau, bei dem die Deckelöffnung und deren nächste Umgebung von dem die Deckelöffnung und deren nächste Umgebung von der Membran freigegeben werden, in diesen Bereich mit der Zeit etwas Fettablagerung eindringen, so wird diese ohne besondere Umstände entfernt, wenn der Aufnahmekörper zum Reinigen des gesamten Anlagebereiches auf einfache Weise durch Lösen des Befestigungselementes entfernt wird. Im Gebrauch dichtet die Membran in Doppelfunktion, über das Befestigungselement angedrückt, die Deckelöffnung bei jedem Druck gegen die Atmosphäre ab.

Ein zusätzlicher Schutz des Druckanzeigers gegen Eindringen von Fremdkörpern, die auch mit Reinigungsflüssigkeit eindringen können, wird dadurch erreicht, daß eine den Anzeigestift führende Hülse an der Deckeloberseite mit einer durchsichtigen Haube verschlossen ist. Gleichzeitig verhindert die Haube, daß die Hausfrau versucht, von dieser Seite her den Druckanzeiger zu Reinigen oder gar zu zerlegen.

Weiterhin kann der erfindungsgemäße Dampfdruckkochtopf einen ins Topfinnere ragenden Temperaturfühler mit einem Anzeigeorgan an der Deckelaußenseite und einer Dichtung im Bereich einer Ausnehmung zum Topfinneren aufweisen. Auch der Temperaturfühler ist damit ein fest eingebautes, keiner Verschmutzung zugängliches Teil der Sicherheits- und Überwachungseinrichtungen. In baulich einfacher Weise kann er dabei in einem als Fixierungselement für den Deckel eine Ausnehmung des Deckels durchsetzenden hohlen Zapfen im Griffteil geführt sein.

Bei einem Dampfdruckkochtopf, bei dem das Befestigungselement als Gewindebolzen und Mutter ausgebildet ist, kann der Bolzen am Aufnahmekörper fest und die Mutter samt einer Dichtung vom Topfinneren her aufschraubbar sein. Die Mutter kann in einfacher Weise und bei entsprechenden Abmessungen ohne Werkzeug gelöst und damit der Aufnahmekörper zum Reinigen oder Auswechseln in einfacher Weise abgenommen werden.

Bei einer anderen Ausführungsform kann der Bolzen fest am Deckel nach außen ragen und die Mutter mit dem Aufnahmekörper unverlierbar verbunden sein, so daß sich beim Lösen der Mutter der Aufnahmekörper mit abhebt. Dies hat den Vorteil, daß bei einem unbedachten Lösen der Mutter, während noch Restdruck im Topf vorhanden ist, dieser entweichen kann, ohne daß ein Teil weggeschleudert wird.

Ausführungsbeispiele eines erfindungsgemäßen Dampfdruckkochtopfes werden nachstehend anhand der Zeichnungen beschrieben. Es zeigen :

Figur 1 im Schnitt einen Teilbereich eines Sicherheits- und Überwachungseinrichtungen aufweisenden Deckels für einen Dampfdruckkochtopf,

Figur 2 einen entsprechenden Ausschnitt einer anderen Ausführungsform,

Figur 3 einen Schnitt durch eine andere Ausführungsform eines Deckels mit Sicherheits- und Überwachungseinrichtungen, und

Figur 4 eine Draufsicht auf den in Fig. 3 dargestellten Bereich.

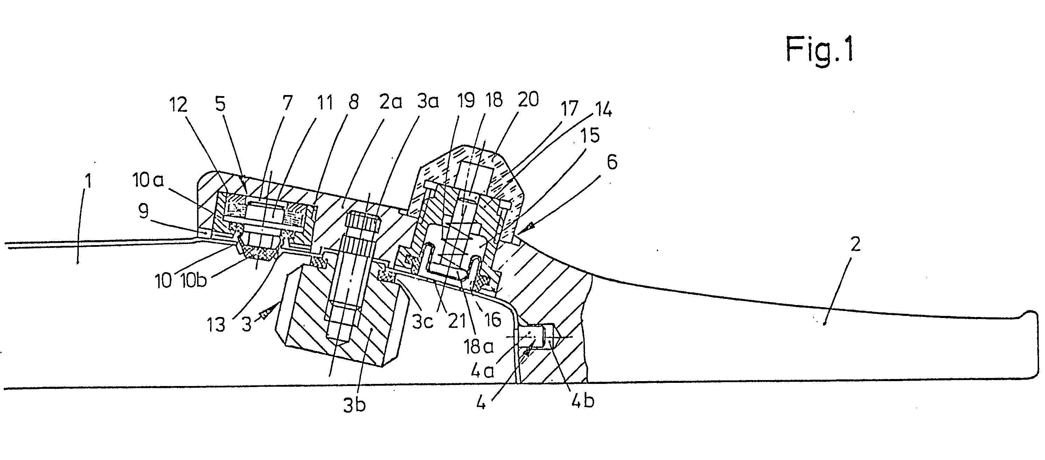

Fig. 1 zeigt einen Teilbereich eines Deckels 1 eines Dampfdruckkochtopfes mit einem daran angebrachten Stielgriff 2. Der Stielgriff 2 übergreift einen Teil der Deckelfläche mit einem Bereich 2a. Im Bereich 2a ist der Stielgriff mit einem als Ganzes mit 3 bezeichneten Befestigungselement am Deckel 1 gehalten. Mit 4 ist als Ganzes ein den richtigen Sitz des Stielgriffes am Deckel gewährleistendes Fixierungselement bezeichnet. Das Befestigungselement 3 besteht dabei aus einem im deckelübergreifenden Bereich 2a eingeschweißten Bolzen 3a, einer von der Deckelinnenseite her auf diesen aufschraubbaren Überwurfmutter 3b und einem in einen Hals der Mutter eingelegten Dichtungsring 3c. Das Fixierungselement besteht aus einem an der Deckelseite angebrachten Zapfen 4a und einer Einrastbohrung 4b am Stielgriff.

Der deckelübergreifende Bereich 2a des Stielgriffes 2 bildet den Aufnahmekörper für ein Sicherheitsventil 5 und einen Druckanzeiger 6.

Das Sicherheitsventil 5 ist in einem an der der Deckeloberfläche zugewandten Seite des Stielgriffes offenen Hohlraum 7 untergebracht. Dieser Hohlraum ist mit einer Hülse 8 ausgekleidet, die eine Austrittsöffnung 9 durch den Aufnahmekörper 2a ins Freie freiläßt. An der Hülse 8 ist eine im wesentlichen napfförmige Membran 10 mit ihrem Ringrand 10a befestigt. Ihr verdickter Bodenbereich 10b bildet den Ventilteller. An dessen Innenfläche greift ein Ventilstößel 11 unter dem Druck einer Feder 12 an, die in der Hülse gelagert ist. Der Ventilstößel 11 drückt dabei den Bodenbereich 10b der Membran in den Ventilsitz 13, der aus einer zum Topfinneren hin gestulpten Öffnung des Deckels 1 besteht. Die Membran 10 dichtet den Hohlraum 7 sowohl bei geschlossenem Ventil als auch bei geöffnetem Ventil und bei vom Deckel abgenommenem Stielgriff nach außen ab.

Der Druckanzeiger 6 weist eine Hülse 14 als Gehäuse auf, die fest im Aufnahmekörper 2a, aus diesem nach oben herausragend, angeordnet ist. Die Hülse 14 bildet an ihrer der Deckeloberfläche nahen Bereich einen Hohlraum 15, der zum Deckel hin mit einer in der Hülse fest verankerten Membran 16 völlig abgedichtet ist. Der Hohlraum 5 verengt sich in dem aus der Oberseite des Aufnahmekörpers 2a herausragenden Bereich zu einer rohrförmigen Führung 17 für einen Anzeigestift 18. Dieser stützt sich mit seinem in den Hohlraum 15 ragenden Ende mit einem Teller 18a auf die Membran 16, in dieser Richtung belastet durch eine Druckfeder 19. Über das aus dem Aufnahmekörper 2a herausragende Teil der Hülse 14 ist eine durchsichtige Haube 20, den Hohlraum 15 von dieser Seite abdeckend, gestülpt und fest mit der Hülse 14 verbunden. Im Deckel 1 ist eine Öffnung 21 so angeordnet, daß sich unter dem Druck des federbelasteten Tellers 18a die Membran 16 dicht von außen her an sie anlegt. Der Druckanzeiger 6 wirkt in folgender Weise : In Ruhestellung, d. h. bei nicht aufgesetztem Deckel oder bei aufgesetztem Deckel, aber normalem Druck im Kochtopf, dichtet die Membran die Deckelöffnung 21 ab. Erhöht sich bei aufgesetztem Deckel der Druck im Topfinneren, so kann dieser durch die Öffnung 21 über die Membran 16 den Anzeigestift 18 gegen den Druck seiner Druckfeder 19 anheben. Das obere Ende des Stößels bewegt sich dann aus der Führung 17 nach oben, und daran angebrachte, den Druck im Topfinneren anzeigende Markierungen können durch die durchsichtige Haube 20 erkannt werden. In dieser Stellung kann zwar Luft bzw. Dampf aus dem Topfinneren durch die Deckelöffnung 21 austreten, aber nur in eine außer vom Deckel nur von der Membran 16 begrenzte kleine Kammer außerhalb des Hohlraumes 15. Eine nennenswerte Verunreinigung dieser Kammer ist unter diesen Umständen nicht zu befürchten. Außerdem ist dieser Bereich bei vom Deckel abgenommenem Stielgriff nur von deren außenliegenden Membranoberfläche begrenzt und gegebenenfalls leicht zu reinigen. Dieses Abnehmen des Stielgriffes vom Deckel erfolgt in einfacher Weise durch Lösen der Überwurfmutter 3b. Die Montage im umgekehrten Sinne erfolgt ebenso einfach.

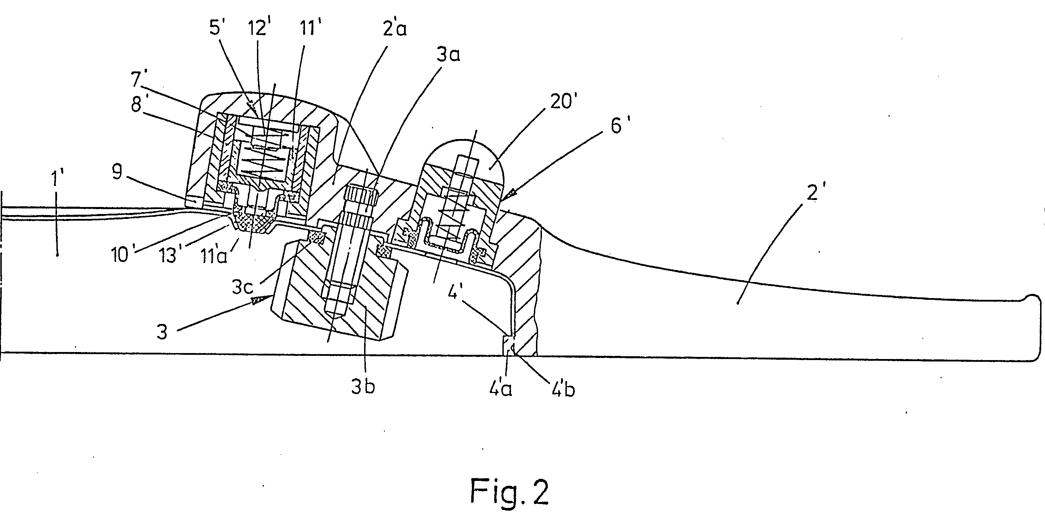

Fig. 2 zeigt einen Fig. 1 entsprechenden Bereich eines anderen Ausführungsbeispiels eines Dampfdruckkochtopf-Deckels 1'. Sein Stielgriff 2' mit einen Teil des Deckels übergreifenden Bereich 2'a ist in gleicher Weise, wie bei Fig. 1 beschrieben, mittels eines Gewindebolzens 3a, einer Überwurfmutter 3b und eines Dichtungsringes 3c mit dem Deckel 1' verbunden. Im folgenden Text wird nur auf die Unterschiede gegenüber der Fig. 1 eingegangen : Beim Sicherheitsventil 5' ist der Ventilstößel 11' in seinem ventilfernen Bereich büchsenförmig ausgebildet und die als Schraubenfeder ausgebildete Feder 12' ist im Inneren des Stößels angeordnet. An seinem ventilseitigen Ende trägt der Stößel 11' einen Ventilkegel 11'a, der mit dem Ventilsitz 13' am Deckel zusammenwirkt. Die Membran 10' ist auf der Rückseite des Ventilkegels 11'a, den Stößel manschettenartig umgebend, mit ihrem freien Rand an der Hülse 8' befestigt. Sie dichtet damit den Hohlraum 7' des Sicherheitsventils 5' in gleicher Weise wie in Fig. 1 ab.

Der Druckanzeiger 6' unterscheidet sich von der Ausführung nach Fig. 1 im wesentlichen durch die Form seiner durchsichtigen Haube 20'.

Ferner unterscheidet sich der Deckel nach Fig. 2 von dem nach Fig. 1 noch durch die Art des Fixierungselementes 4' : Am Stielgriff 2' ist eine Nase 4'a angeordnet, und der Deckel weist in diesem Bereich eine Einrastausnehmung 4'b auf.

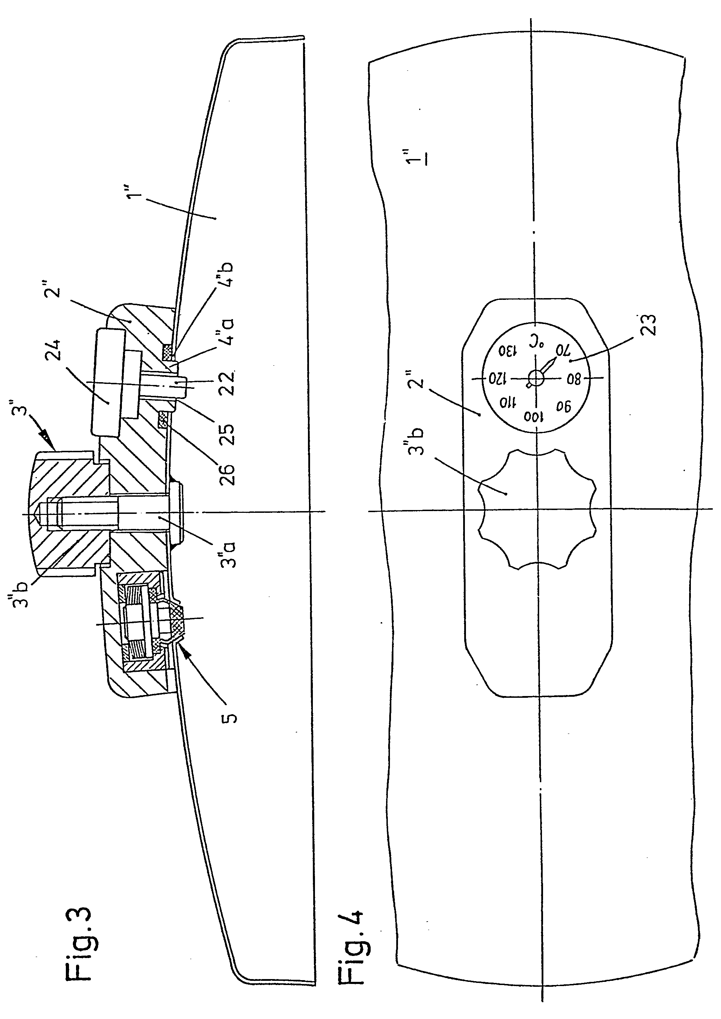

Die Figuren 3 und 4 zeigen eine weitere Ausführungsform mit einem Deckel 1''. Als Aufnahmekörper für die Sicherheits- und Überwachungseinrichtungen ist ein Deckelgriff 2'' mittig auf der Deckelwölbung angebracht. Als Befestigungselement 3'' dient ein am Deckel angeschweißter, nach oben vorstehender Bolzen 3''a und eine Überwurfmutter 3''b. Letztere ist auf nicht gezeichnete Weise unverlierbar mit dem Deckelgriff 2'' verbunden.

Der Deckelgriff 2'' enthält ein Sicherheitsventil 5, wie es bereits anhand von Fig. 1 beschrieben ist, sowie einen Temperaturanzeiger. Ein Temperaturfühler 22 steht mit einer Temperaturanzeige 23 auf der Oberseite seines fest mit dem Deckelgriff 2'' verbundenen Gehäuses 24 in Verbindung. Der Temperaturfühler 22 wird in einem hohlen Zapfen 4''a geführt, der an dem Deckelgriff 2'' angeformt ist und eine Ausnehmung 4''b des Deckels durchsetzt. Der Zapfen 4''a mit der Ausnehmung 4''b bildet gleichzeitig das Fixierungselement für den Deckelgriff 2''. Der Hohlraum des Zapfens 4''a ist dabei mit einer Dichtung 25 gefüttert. Gegen die Aunsnehmung 4''b ist er durch eine an der Deckelaußenseite angeordnete Ringdichtung 26 abgedichtet.

Der Deckelgriff 2'' enthält damit die Sicherheits- und Überwachungseinrichtungen ebenso unlösbar eingebaut und gegen das Topfinnere abgedichtet wie die Ausführungsformen nach Fig. 1 und 2. Durch Lösen der Überwurfmutter 3''b kann der Deckelgriff als Ganzes im Bedarfsfall zur Reinigung der Auflageflächen am Deckel und am Deckelgriff abgenommen und auf ebenso einfache Weise wieder befestigt werden. Weitere Demontagen sind nicht erforderlich.

Die Erfindung ist nicht auf die Ausführungsbeispiele beschränkt. Einzelheiten der Sicherheits- und Überwachungseinrichtungen, wie Formen der Hülsen, Stößel und Federn, können in weitem Rahmen variieren. Wesentlich bleiben der unlösbare Einbau und die Abdichtung.

### Ansprüche

1. Dampfdruckkochtopf mit einem Deckel (1), mit einem im Betriebszustand mittels einer lösbaren Befestigungseinrichtung (3) fest mit den Deckel verbundenen Aufnahmekörper (2a), insbesondere einem Deckelgriff, mit Sicherheits- und Überwachungseinrichtungen (5, 6), von denen wenigstens eine federbelastet ist und die in im Betriebszustand mit dem Topfinneren kommunizierenden Öffnungen (21) aufweisenden Hohlräumen (7, 15) des Aufnahmekörpers angeordnet sind, und mit einem im Betriebszustand zwischen den beweglichen Teilen der Sicherheits- bzw. Überwachungseinrichtung und dem Topfinneren im Bereich der zugehörigen Öffnung befindlichen, beweglichen Dichtungselement (10, 16), dadurch gekennzeichnet, daß die Befestigungseinrichtung (3) unabhängig von den Sicherheits- und Überwachungseinrichtungen (5, 6) angeordnet und lösbar ist, und daß das jeweilige Dichtungselement (10, 16) am Aufnahmekörper (2a) im Öffnungsbereich gelagert ist.

2. Topf nach Anspruch 1, dadurch gekennzeichnet, daß als Dichtungselement jeweils eine Membran (10 bzw. 16) vorgesehen ist.

3. Topf nach Anspruch 2, gekennzeichnet durch ein Sicherheitsventil (5) mit einer Membran (10), die fest mit dem Aufnahmekörper (2a) verbunden und mittels eines im abgedichteten Hohlraum (7) beweglich und durch eine Feder (12) belastet angeordneten Ventilstößels (11) gegen einen Ventilsitz (13) drückbar ist.

4. Topf nach Anspruch 3, dadurch gekennzeichnet, daß der Ventilsitz (13) aus einer gestulpten Ausnehmung des Deckels (1) besteht.

5. Topf nach Anspruch 3 oder 4, dadurch gekennzeichnet, daß die Membran (10) fest mit einer fest im Aufnahmekörper (2a) angebrachten, den Hohlraum (7) bildenden Hülse (8) verbunden ist.

6. Topf nach Anspruch 5, dadurch gekennzeichnet, daß in der Hülse (8) der Ventilstößel (11) und die Feder (12) untergebracht sind.

7. Topf nach Anspruch 3, dadurch gekennzeichnet, daß die Membran (10') fest auf der dem Topfinneren abgewandten Seite eines Ventilkegels (11'a) angeordnet ist.

8. Topf nach wenigstens einem der Ansprüche 1 bis 7, gekennzeichnet durch einen Druckanzeiger (6) mit einem an der Außenseite des Deckels (1) angeordneten, durch eine Membran (16) abgedichteten Hohlraum (15) im Aufnahmekörper (2a), wobei die Membran (16) mit dem Topfinneren durch eine Deckelöffnung (21) in Verbindung steht, an der sie unter dem Druck eines im Hohlraum (15) federbelastet angeordnetem Anzeigestiftes (18) anliegt, auf den sie den Druck im Topfinneren überträgt.

9. Topf nach Anspruch 8, dadurch gekennzeichnet, daß die Membran (16), die Deckelöffnung (21) gegen die Atmosphäre abdichtend, über das Befestigungselement (3) an den Deckel (1) angedrückt ist.

10. Topf nach den Ansprüchen 8 und 9, dadurch gekennzeichnet, daß der Anzeigestift (18) in einer im Aufnahmekörper (2a) festen, mit der Membran (16) verschlossenen Hülse (14) geführt ist.

11. Topf nach Anspruch 10, dadurch gekennzeichnet, daß die Hülse (14) an der Deckeloberseite mit einer durchsichtigen Haube (20') verschlossen ist.

12. Topf nach wenigstens einem der Ansprüche 1 bis 11, gekennzeichnet durch einen ins Topfinnere ragenden Temperaturfühler (22) mit einem Anzeigeorgan (23) an der Deckelaußenseite und einer Dichtung (26) im Bereich einer Ausnehmung (4"b) zum Topfinneren.

13. Topf nach Anspruch 12, dadurch gekennzeichnet, daß der Temperaturfühler (22) in einem als Fixierungselement für den Deckel (1") eine Ausnehmung (4"b) des Deckels (1") durchsetzenden hohlen Zapfen (4"a) im Aufnahmekörper (2") geführt ist.

14. Topf nach wenigstens einem der Ansprüche 1 bis 13 mit einem als Gewindebolzen (3a) und Mutter (3b) ausgebildeten Befestigungselement (3), dadurch gekennzeichnet, daß der Bolzen (3a) am Aufnahmekörper (2a) fest ist und die Mutter (3b) samt einer Dichtung (3c) vom Topfinneren her aufschraubbar ist.

15. Topf nach wenigstens einem der Ansprüche 1 bis 13 mit einem als Gewindebolzen (3"a) und Mutter (3"b) ausgebildeten Befestigungselement (3"), dadurch gekennzeichnet, daß der Bolzen (3"a) fest am Deckel (1") nach außen vorstehend und die Mutter (3"b) mit dem Aufnahmekörper (2") unverlierbar verbunden ist.


**Claims**


1. A steam pressure cooker comprising a lid (1), a housing body (2a), particularly a lid handle, rigidly connected in the operating state to said lid by means of releasable fastener means (3), safety and monitoring means (5, 6) located within cavities (7, 15) of said housing body formed with openings (21) communicating with the interior of the cooker in the operating state, at least one of said safety and monitoring means being springloaded, and a movable sealing element (10, 16) located in the operating state between the movable parts of said safety of monitoring means, respectively and the interior of said cooker adjacent the associated opening, characterized in that said fastener means (3) is located independently of said safety and monitoring means (5, 6) while being releasable, and in that each said sealing element (10, 16) is mounted to said housing body (2a) adjacent the respective opening.

2. A cooker according to claim 1, characterized in that each said sealing element is provided in the form of a diaphragm (10 or 16, respectively).

3. A cooker according to claim 2, characterized by a safety valve (5) comprising a diaphragm (10) rigidly connected to said housing body (2a) and adapted to be urged into engagement with a valve seat (13) by means of a valve stem (11) movably disposed within the sealed cavity (7) under the bias of a spring (12).

4. A cooker according to claim 3, characterized in that said valve seat (13) consists of a flared recess of said lid (1).

5. A cooker according to claim 3 or 4, characterized in that said diaphragm (10) is rigidly connected to a bushing (8) rigidly mounted in said housing body (2a) and forming said cavity (7).

6. A cooker according to claim 5, characterized in that said valve stem (11) and said spring (12) are disposed in said bushing (8).

7. A cooker according to claim 3, characterized in that said diaphragm (10') is rigidly disposed on the side of a valve cone (11'a) facing away from the interior of said cooker.

8. A cooker according to at least one of claims 1 to 7, characterized by a pressure indicator (6) including a cavity (15) in said housing body (2a) located at the outer side of said lid (1) and sealed by a diaphragm (16), said diaphragm communicating with the interior of said cooker through a lid opening (21) and being engaged with said lid opening by the pressure of a springloaded indicator pin (18) disposed in said cavity (15) so as to transmit the interior pressure of said cooker to said indicator pin.

9. A cooker according to claim 8, characterized in that said diaphragm (16) is maintained in pressure contact with said lid (1) through said fastener element (3) so as to seal said opening (21) against the atmosphere.

10. A cooker according to claims 8 and 9, characterized in that said indicator pin (18) is guided in a bushing (14) rigidly mounted in said housing body (2a) and closed by said diaphragm (16).

11. A cooker according to claim 10, characterized in that said bushing (14) is closed by a transparent cover (20) on the upper side of said lid.

12. A cooker according to at least one of claims 1 to 11, characterized by a temperature sensor (22) projecting into the interior of said cooker and having an indicator element (23) on the outer side of the lid, and a seal (26) adjacent a passage (4"b) leading to the interior of said cooker.

13. A cooker according to claim 12, characterized in that said temperature sensor (22) is located in a hollow stud (4"a) of said housing body (2") extending through a passage (4"b) of said lid (1") so as to form a fixing element for said lid (1").

14. A cooker according to at least one of claims 1 to 13, comprising a fastener element (3) formed by a threaded bolt (3a) and a threaded nut (3b), characterized in that said threaded bolt (3a) is rigidly connected to said housing body (2a) and that said threaded nut (3b) is adapted to be threaded thereon from the interior of said cooker, with a sealing gadget (3c) disposed therebetween.

15. A cooker according to at least one of claims 1 to 13, comprising a fastener element (3") formed by a threaded bolt (3"a) and a threaded nut (3″b), characterized in that said threaded bolt (3″a) is rigidly connected to said lid (1″) so as to project outwards thereof, said threaded nut (3″b) being non-loosably connected to said housing body (2″).

## Revendications

1. Autocuiseur comportant un couvercle (1) un bloc porte-organes (2a), en particulier une poignée de couvercle, solidarisée avec le couvercle, lorsque l'appareil fonctionne, au moyen d'un élément de fixation (3) desserrable, des organes de sécurité et de contrôle (5, 6), dont l'un au moins est soumis à l'action d'un ressort et qui sont placés dans des cavités (7, 15) du bloc porte-organes munies d'orifices (21) communiquant, lorsque l'appareil fonctionne, avec l'intérieur du récipient de cuisson, et des éléments d'étanchéité mobiles (10, 16) disposés respectivement, lorsque l'appareil fonctionne, entre les parties mobiles des organes de sécurité et de contrôle et l'intérieur du récipient de cuisson dans le voisinage de l'orifice correspondant, caractérisé en ce que l'élément de fixation (3) est indépendant, et desserrable indépendamment, des organes de sécurité et de contrôle (5, 6), et en ce que chacun des éléments d'étanchéité (10, 16) est logé dans le bloc porte-organes (2a) au voisinage de l'orifice correspondant.

2. Autocuiseur selon la revendication 1, caractérisé en ce que les éléments d'étanchéité sont constitués respectivement par une membrane (10, 16).

3. Autocuiseur selon la revendication 2, caractérisé par une soupape de sécurité (5), munie d'une membrane (10) solidaire du bloc porte-organes (2a) et pouvant être appliquée contre un siège de soupape (13) au moyen d'un poussoir (11) mobile dans une cavité étanche (7) et soumis à l'action d'un ressort (12).

4. Autocuiseur selon la revendication 3, caractérisé en ce que le siège de soupape (13) est formé par un évidement embouti du couvercle (1).

5. Autocuiseur selon la revendication 3 ou 4, caractérisé en ce que la membrane (10) est solidaire d'un fourreau (8) enchâssé dans le bloc porte-organes (2a) et formant la cavité (7).

6. Autocuiseur selon la revendication 5, caractérisé en ce que dans le fourreau (8) sont logés le poussoir de soupape (11) et le ressort (12).

7. Autocuiseur selon la revendication 3, caractérisé en ce que la membrane (10′) est fixée sur le côté d'un cône de soupape (11′a) opposé à l'intérieur du récipient de cuisson.

8. Autocuiseur selon l'une au moins des revendications 1 à 7, caractérisé par un indicateur de pression (6), comportant une cavité (15) placée dans le bloc porte-organes (2a) sur le côté extérieur du couvercle (1) et fermée de façon étanche par une membrane (16), la membrane (16) étant reliée à l'intérieur du récipient de cuisson par un orifice (21) du couvercle, sur lequel elle s'applique sous la poussée d'une tige indicatrice (18) disposée dans la cavité (15) et soumise à l'action d'un ressort, ladite membrane (16) transmettant à ladite tige indicatrice (18) la pression régnant à l'intérieur du récipient de cuisson.

9. Autocuiseur selon la revendication 8, caractérisé en ce que la membrane (16) est appliquée contre le couvercle (1) par l'intermédiaire de l'élément de fixation (3), isolant ainsi de façon étanche l'orifice (21) du couvercle de l'atmosphère.

10. Autocuiseur selon les revendications 8 et 9, caractérisé en ce que la tige indicatrice (18) est mobile dans un fourreau (14) enchâssé dans le bloc porte-organes (2a) et fermé par la membrane (16).

11. Autocuiseur selon la revendication 10, caractérisé en ce que le fourreau (14) est fermé sur le côté supérieur du couvercle par une coiffe transparente (20′).

12. Autocuiseur selon l'une au moins des revendications 1 à 11, caractérisé par une sonde de température (22) dépassant à l'intérieur du récipient de cuisson, avec un organe indicateur (23) placé sur le côté extérieur du couvercle, et une garniture d'étanchéité (26) au voisinage d'un évidement (4″b) communiquant avec l'intérieur du récipient de cuisson.

13. Autocuiseur selon la revendication 12, caractérisé en ce que la sonde de température (22) est enfilée dans une douille (4″a) fixée dans le bloc porte-organes (2″) traversant un évidement (4″b) du couvercle (1″) et servant d'élément de fixation pour le couvercle (1″).

14. Autocuiseur selon l'une au moins des revendications 1 à 13, comportant un élément de fixation (3) constitué d'un goujon fileté (3a) et d'un écrou (3b), caractérisé en ce que le goujon (3a) est scellé dans le bloc porte-organes (2a), et en ce que l'écrou (3b) peut être vissé avec sa garniture d'étanchéité (3c) de l'intérieur du récipient de cuisson.

15. Autocuiseur selon l'une au moins des revendications 1 à 13, comportant un élément de fixation (3″) constitué d'un goujon fileté (3″a) et d'un écrou (3″b), caractérisé en ce que le goujon (3″a) est scellé dans le couvercle (1″) et dépasse vers l'extérieur, et en ce que l'écrou (3″b) est lié au bloc porte-organes (2″) de façon à le rendre imperdable.

Fig.1

Fig.2

Fig.3

3"b   3"   24   2"   1"

5   3"a   26   25   22   4"a   4"b

Fig.4

3"b   2"   1"

°C   90 100 110 120 130 80 70

23